# EUROPÄISCHE PATENTSCHRIFT

(11) **EP 4 191 111 B1**
(45) Veröffentlichungstag und Bekanntmachung des Hinweises auf die Patenterteilung: **11.12.2024**
(21) Anmeldenummer: 22201816.0
(22) Anmeldetag: 17.10.2022
(51) Int. Cl.: F16L 13/02, F16L 13/10, F16L 33/30, F16L 37/084, F16L 41/00, G01K 1/14, G01K 13/02

(54) **MEDIENFÜHRUNGSKUPPLUNG UND MEDIENFÜHRUNG**
MEDIA GUIDING COUPLING AND MEDIA GUIDANCE
COUPLAGE DE GUIDAGE DE MÉDIA ET GUIDAGE DE MÉDIA

(30) Priorität: 02.12.2021 DE 102021213687
(43) Veröffentlichungstag der Anmeldung: 07.06.2023
(73) Patentinhaber: ContiTech Techno-Chemie GmbH, 61184 Karben (DE)
(72) Erfinder: Dr. Richards, Justin, 30165 Hannover (DE); Linzmaier, Markus, 30165 Hannover (DE)
(74) Vertreter: Continental Corporation

(56) Entgegenhaltungen:
- EP-B1- 2 531 767
- WO-A1-2020/244842
- US-A1- 2017 045 173

## Beschreibung

Die vorliegende Erfindung betrifft eine Medienführungskupplung.

Zum Transport bzw. zur Führung von Medien wie insbesondere von Fluiden ist die Verwendung von Schläuchen und Rohren bekannt, welche gemeinsam auch als Medienführungen bezeichnet werden können. Schläuche werden dabei als eher flexibel hinsichtlich ihres Materials angesehen, Rohre als eher starr. Zu den Fluiden gehören neben Flüssigkeiten auch Gase und pastöse Stoffe.

Mehrere Schläuche können dabei untereinander mittels Schlauchkupplungen miteinander verbunden werden, welche jeweils an dem entsprechenden offenen Ende fest an dem jeweiligen Schlauch angeordnet sind. Über derartige Schlauchkupplungen können Schläuche ebenfalls mit Aggregaten verbunden werden, welche ihrerseits eine entsprechende Kupplung aufweisen. Derartige Schlauchkupplungen können als sogenannte Schnellkupplungen, im Englischen als Quick Connector bezeichnet, ausgebildet sein, welche ein schnelles und einfaches Verbinden und zerstörungsfreies Lösen ermöglichen können. Derartige Schlauchkupplungen können aus Metall aber auch aus Kunststoff, insbesondere als Spritzgussteile, ausgebildet sein. Dies gilt vergleichbar für Rohre. Entsprechend können derartige Schlauch- oder Rohrkupplungen auch gemeinsam als Medienführungskupplungen bezeichnet werden.

Für viele Anwendungen kann es sinnvoll oder sogar erforderlich sein, die Temperatur des strömenden Mediums sensorisch zu erfassen. Hierzu ist es beispielsweise bekannt, einen Temperatursensor, üblicherweise in Form eines NTC-Thermistors (Heißleiter mit negativem Temperaturkoeffizienten), in eine Öffnung einer Schnellkupplung einzusetzen. Das Sensorelement bzw. der Messwertumformer des NTC-Thermistors ragt dabei durch eine Durchgangsöffnung der Schnellkupplung in das Medium hinein und hat somit direkten Kontakt zum Medium, was die Temperaturübertragung von Medium zu Messwertumformer begünstigen, d.h. die Ansprechzeit des NTC-Thermistors geringhalten kann.

Nachteilig ist hierbei, dass die Durchgangsöffnung durch die Schnellkupplung hindurch, welche der Aufnahme und Durchführung des Messwertumformers des NTC-Thermistors dient, mit aufgenommenem Messwertumformer mediendicht abzuschließen ist. Entsprechend sind Maßnahmen zu treffen, um die Dichtigkeit am Anschluss des Messwertumformers herzustellen. Diese Maßnahmen können mit höheren Kosten für zusätzliche Komponenten und dem Risiko von verbleibenden Undichtigkeiten verbunden sein.

Nachteilig ist ferner, dass beim Austausch des Messwertumformers, beispielsweise im Falle eines Defekts, ein umfangreicher Arbeitsaufwand anfallen kann. Durch die Tatsache, dass bei einer Demontage der entnommene Messwertumformer eine offene Durchgangsöffnung in das Innere der Schnellkupplung hinterlässt, muss vor dem Austausch des Messwertumformers das Medium aus dem System entfernt werden.

Alternativ ist daher bekannt, in der Schnellkupplung eine Mulde vorzusehen, welche orthogonal zum Fluss des Mediums angebracht ist. Mit anderen Worten ist für den Messwertumformer des NTC-Thermistors keine Durchgangsöffnung vorhanden, so dass die entsprechenden zuvor beschriebenen Nachteile vermieden werden können. Stattdessen ist der Messwertumformer des NTC-Thermistors in der Mulde der Schnellkupplung angeordnet und ragt somit, durch das Material der Schnellkupplung muldenförmig umgeben, in das Medium hinein, ohne mit dem Medium in direkten Kontakt zu kommen.

In jedem Fall können Temperatursensoren durch invasive Lösungen in Kunststoff-Spritzgussteile integriert werden. Diese Lösungen können aus zwei verschiedenen Teilen bestehen, bei denen eine Schlauchkupplung und die eingehausten Temperatursensoren beim Anwender auf das endgültige Teil montiert werden.

Andere Ansätze bestehen darin, den Temperatursensor beispielsweise als NTC-Thermistor (Negative Temperature Coefficient Thermistor) direkt in ein Spritzgussteil zu integrieren, welches die Schlauchkupplung bildet. Dabei stellt das Gehäuse des Temperatursensors einen Anschluss der Schlauchkupplung dar, der innerhalb einer medienführenden Schlauchleitung montiert wird.

Nachteilig ist hierbei, dass die Spritzgussteile der Schlauchkupplungen für die Integration eines Temperatursensors individuell gestaltet werden müssen. Dies stellt einen zusätzlichen Aufwand dar. Insbesondere kann sich hierdurch die Teilevielfalt deutlich erhöhen, wenn unterschiedliche Temperatursensoren verwendet werden können sollen.

Nachteilig ist auch, dass dies die Verwendung neuer Materialien z. B. PA66 bei derartigen Schlauchkupplungen mit Temperatursensoren erschweren kann. Insbesondere sollten lediglich Materialien ohne Glasfaserverstärkung für derartige Anwendungen verwendet werden, da die Glasfasern die thermische Leitfähigkeit des Materials reduzieren und somit die Ansprechzeit und Genauigkeit des Temperatursensors verringern können. Entsprechend steht die Verwendung von Temperatursensoren im Widerspruch zur erhöhten Festigkeit derartiger Schlauchkupplungen, welche durch die Verwendung von glasfaserverstärktem Kunststoff erreicht werden kann. Die Dokumente EP 2 531 767 B1, WO 2020/244842 A1 und US 2017/045173 A1 betreffen Medienführungskupplungen aus dem Stand der Technik.

Eine Aufgabe der vorliegenden Erfindung ist es, eine Medienführungskupplung und insbesondere eine Schnellkupplung für Schläuche und bzw. oder Rohre der eingangs beschriebenen Art bereit zu stellen, so dass die Nachteile bekannter derartiger Medienführungskupplungen behoben oder zumindest reduziert werden können. Insbesondere soll eine Medienführungskupplung geschaffen werden, welche hinsichtlich der Versendung eines Sensors einfacher, schneller, kostengünstiger und bzw. oder flexibler an verschiedene Anwendungen angepasst werden kann. Dies soll insbesondere möglichst einfach, kompakt, kostengünstig, flexibel anwendbar und bzw. oder intuitiv umsetzbar erfolgen. Zumindest soll eine Alternative zu bekannten derartigen Medienführungskupplungen geschaffen werden.

Die Aufgabe wird erfindungsgemäß durch eine Medienführungskupplung mit den Merkmalen der unabhängigen Patentansprüche 1 und 4 sowie durch eine Medienführung nach Anspruch 9 gelöst. Vorteilhafte Weiterbildungen sind in den Unteransprüchen beschrieben Somit betrifft die vorliegende Erfindung eine Medienführungskupplung mit einem ersten Kupplungselement mit einer Durchflussöffnung zur Führung eines Mediums durch sich hindurch, und mit einem ersten Verbindungselement zur Verbindung mit einer zweiten medienführenden Vorrichtung, vorzugsweise mit einem Schlauch, Rohr oder Aggregat, und mit einem zweiten Kupplungselement mit einer Durchflussöffnung zur Führung des Mediums durch sich hindurch, und mit einem ersten Verbindungselement zur Verbindung mit einer dritten medienführenden Vorrichtung, vorzugsweise mit einem Schlauch, Rohr oder Aggregat, wobei die beiden Kupplungselemente derart mediendicht miteinander verbunden sind, so dass ihre Durchflussöffnungen eine gemeinsame Durchflussöffnung der Medienführungskupplung bilden, und wobei das erste Kupplungselement eine Sensoraufnahme und bzw. oder das zweite Kupplungselement eine Sensoraufnahme aufweist.

Der vorliegenden Erfindung liegt, wie eingangs beschrieben, die Erkenntnis zugrunde, dass es bisher aufwendig ist und zu einer entsprechenden Teilevielfalt führen kann, Sensoren wie insbesondere Temperatursensoren auf Medienführungskupplungen wie beispielsweise Schlauch- oder Rohrkupplungen anzuwenden. Schließlich sind derartige Medienführungskupplungen sowohl auf der einen Seite als auch auf der anderen gegenüberliegenden Seite je nach Anwendung an verschiedene andere medienführende Vorrichtungen wie Schläuche, Rohre, Aggregate und dergleichen anzuschließen und entsprechend passend auszubilden. Ferner sind unterschiedliche Sensoren hinsichtlich Typ, Hersteller, Baugröße und dergleichen zu verwenden.

Erfindungsgemäß wird daher zum einen eine Medienführungskupplung mit und vorzugsweise bestehend aus zwei Kupplungselementen ausgebildet, wobei die beiden Kupplungselemente jeweils passend zu einer von vielen verschiedenen medienführenden Vorrichtungen ausgebildet sein können. Entsprechend können je nach Anwendungsfall, d.h. je nach zu verbindenden medienführenden Vorrichtungen, zwei jeweils passende Kupplungselemente ausgewählt und zu einer erfindungsgemäßen Medienführungskupplung verbunden werden. Die beiden Kupplungselemente könne somit separat hergestellt werden, was die Teilevielhaft reduziert. Dies kann die Herstellungskosten reduzieren.

Dabei eine Sensoraufnahme bei wenigstens einer der beiden Kupplungselemente vorzusehen kann zusätzlich die Möglichkeit schaffen, einen Sensor zu verwenden. Entsprechend kann das entsprechende Kupplungselement ferner für unterschiedliche Sensoren ausgelegt sein und je nach Anwendungsfall mit dem anderen Kupplungselement verbunden werden. Auch dies kann die Teilevielhaft reduzieren.

Somit können erfindungsgemäß die Anpassungen einer Medienführungskupplung an einen neuen Anwendungsfall dahingehend reduziert werden, dass vorhandene bzw. bereits konstruierte Kupplungselemente lediglich neu miteinander kombiniert werden müssen, was den Aufwand der Anpassung geringhalten und ggfs. einen Konstruktionsaufwand überflüssig machen kann. Ggfs. können erforderliche Anpassungen auf lediglich eines der beiden Kupplungselemente beschränkt werden, was ebenfalls zu einer Reduzierung des Aufwand führen kann. In jedem Fall kann eine zweiteilige Modularität einer Medienführungskupplung ermöglicht werden.

Die gilt zum anderen entsprechend für eine Anordnung mit zwei Kupplungselementen und einem dazwischenliegenden Sensorelement mit einer Sensoraufnahme, wie weiter unten näher erläutert werden wird.

Die Erfindung ist einsetzbar für jegliche Anwendungen, bei denen die Temperatur des Mediums innerhalb einer Medienführung wie insbesondere innerhalb eines Schlauch- oder Rohrsystems gemessen werden soll. Als Anwendung ist insbesondere die Temperaturmessung von Kühlmitteln in batterieelektrischen Fahrzeugen denkbar.

Gemäß der Erfindung weist das erste Kupplungselement ein zweites Verbindungselement auf, weist das zweite Kupplungselement ein zweites Verbindungselement auf und das erste Kupplungselement und das zweite Kupplungselement mittels ihrer zweiten Verbindungselemente, mittels Rasten, Klipsen oder Schrauben, mediendicht miteinander verbunden sind. Hierdurch können die entsprechenden Eigenschaften und Vorteile auf die erfindungsgemäße Medienführungskupplung angewendet werden.

Gemäß einem weiteren Aspekt der Erfindung ist zwischen den beiden zweiten Verbindungselementen ein Dichtungselement, vorzugsweise ein O-Ring, angeordnet. Hierdurch können die entsprechenden Eigenschaften und Vorteile auf die erfindungsgemäße Medienführungskupplung angewendet werden.

Gemäß einem weiteren Aspekt der Erfindung ist das Kupplungselement ohne Sensoraufnahme als faserverstärktes Spritzgussteil ausgebildet. Hierdurch können die entsprechenden Eigenschaften und Vorteile auf die erfindungsgemäße Medienführungskupplung angewendet werden. Insbesondere können die strukturverstärkenden Eigenschaften von faserverstärkten Spritzgussteilen bei dem Kupplungselement ohne Sensoraufnahme genutzt werden und gleichzeitig die negativen Einflüsse einer Faserverstärkung bei dem Kupplungselement mit Sensoraufnahme vermieden werden.

Die vorliegende Erfindung betrifft auch eine Medienführungskupplung mit einem ersten Kupplungselement mit einer Durchflussöffnung zur Führung eines Mediums durch sich hindurch, und mit einem ersten Verbindungselement zur Verbindung mit einer zweiten medienführenden Vorrichtung, vorzugsweise mit einem Schlauch, Rohr oder Aggregat, mit einem zweiten Kupplungselement mit einer Durchflussöffnung zur Führung des Mediums durch sich hindurch, und mit einem ersten Verbindungselement zur Verbindung mit einer dritten medienführenden Vorrichtung, vorzugsweise mit einem Schlauch, Rohr oder Aggregat, und mit einem Sensorelement mit einer Durchflussöffnung zur Führung des Mediums durch sich hindurch, wobei das erste Kupplungselement mit dem Sensorelement und das Sensorelement mit dem zweiten Kupplungselement derart mediendicht miteinander verbunden sind, so dass ihre Durchflüsse einen gemeinsamen Durchflussöffnung der Medienführungskupplung bilden, und wobei das Sensorelement eine Sensoraufnahme aufweist.

Auf diese Art und Weise können die zuvor beschriebene Aspekte, Eigenschaften und Vorteile der vorliegenden Erfindung auch auf eine dreigeteilte Medienführungskupplung angewendet werden, indem die beiden außenliegenden Kupplungselemente zu den jeweiligen verschiedenen anderen medienführenden Vorrichtungen passend ausgebildet und verwendet sowie mittels des Sensorelements miteinander verbunden werden können, welche ihrerseits passend zum zu verwendenden Sensor ausgebildet bzw. ausgewählt werden kann. Dies kann die Umsetzung einer dreiteiligen Modularität ermöglichen.

Gemäß der Erfindung weist bzw. weisen das erste Kupplungselement und bzw. oder das zweite Kupplungselement ein zweites Verbindungselement auf, wobei das Sensorelement ein erstes Verbindungselement, vorzugweise und ein zweites Verbindungselement, aufweist, und wobei das erste Kupplungselement und bzw. oder das zweite Kupplungselement mittels ihrer zweiten Verbindungselemente, mittels Rasten, Klipsen oder Schrauben, mediendicht mit dem Verbindungselement(en) des Sensorelements verbunden sind. Hierdurch können die entsprechenden Eigenschaften und Vorteile auf die erfindungsgemäße Medienführungskupplung angewendet werden.

Gemäß einem weiteren Aspekt der Erfindung ist zwischen den Verbindungselementen (jeweils) ein Dichtungselement, vorzugsweise ein O-Ring, angeordnet. Hierdurch können die entsprechenden Eigenschaften und Vorteile auf die erfindungsgemäße Medienführungskupplung angewendet werden.

Gemäß einem weiteren Aspekt der Erfindung ist bzw. sind das erste Kupplungselement und bzw. oder das zweite Kupplungselement als faserverstärktes Spritzgussteil ausgebildet. Hierdurch können die entsprechenden Eigenschaften und Vorteile auf die erfindungsgemäße Medienführungskupplung angewendet werden.

Gemäß einem weiteren Aspekt der Erfindung sind das erste Verbindungselement des ersten Kupplungselements und das erste Verbindungselement des zweiten Kupplungselements mit gleichen oder unterschiedlichen Verbindungsmechanismen ausgebildet. Hierdurch können die entsprechenden Eigenschaften und Vorteile auf die erfindungsgemäße Medienführungskupplung angewendet werden.

Gemäß einem weiteren Aspekt der Erfindung ragt die Sensoraufnahme wenigstens abschnittsweise, vorzugsweise vollständig, vorzugsweise senkrecht zur Durchflussöffnung, in die Durchflussöffnung hinein. Dies kann die Kontaktfläche zwischen der Sensoraufnahme und damit auch einem von der Sensoraufnahme aufgenommenen Sensor vergrößern und damit auch die sensorische wie beispielsweise thermische Übertragung zwischen dem Medium und dem Sensor verbessern

Die vorliegende Erfindung betrifft ferner eine Medienführung mit einer Medienführungskupplung wie zuvor beschrieben und mit einer zweiten medienführenden Vorrichtung, vorzugsweise mit einem Schlauch, Rohr oder Aggregat. Eine Medienführung kann somit beispielsweise eine Schlauch- oder Rohranwendung sein, welche einen Schlauch oder ein Rohr als zweite medienführende Vorrichtung bzw. als eigentliche Medienführung sowie eine hiermit fest und mediendicht verbundene Medienführungskupplung mit beispielsweise einer Schlauch- oder Rohrkupplung sein. Hierdurch kann die erfindungsgemäße Medienführungskupplung umgesetzt und angewendet werden, um dessen Eigenschaften und Vorteile nutzen zu können.

Mit anderen Worten ist die Lösung Teil eines modularen Schnellverbinders, bei dem die Sensor- und insbesondere die Temperaturmessfunktion durch die Integration eines, vorzugsweise zylindrischen, Teils in der Mitte oder am Ende des Schnellverbinders realisiert wird, an dem ein Temperatursensor befestigt oder direkt eingebaut werden kann. Durch die Verwendung einer solchen Lösung kann beispielsweise eine hohe Wärmeleitfähigkeit erreicht werden, ohne dass die vorhandenen Werkzeuge verändert werden müssen. Auch kann die Herstellung eines solchen beispielsweise temperatursensitiven Schnellverbinders nur eine kleine Anpassung des Prozesses erfordern. Die Lösung kann auch ein vergleichsweise kleines Volumen ermöglichen und in jedes Gerät eingebaut werden, welches modular aufgebaut ist. Die Lösung kann auch ein, vorzugsweise zylindrisches, Teil sein, welches beispielsweise auf jeden vorhandenen Schnellanschluss auf der einen Seite eines männlichen und auf der anderen Seite eines weiblichen Verbindungselements montiert werden kann. Dies kann eine höhere Flexibilität bei der Anwendung in derzeit verwendeten Mediensystemen ermöglichen. Diese Lösung, beispielsweise als Sensorring, kann für die Testphase eines Prototyps oder als nachrüstbare Sensoranpassung verwendet werden.

Mehrere Ausführungsbeispiele und weitere Vorteile der Erfindung werden nachstehend im Zusammenhang mit den folgenden Figuren erläutert. Darin zeigt:
- Fig. 1: einen Längsschnitt durch eine erfindungsgemäße Medienführungskupplung gemäß eines ersten Ausführungsbeispiels im getrennten Zustand;
- Fig. 2: die Darstellung der Figur 1 im verbundenen Zustand;
- Fig. 3: einen Längsschnitt durch eine erfindungsgemäße Medienführungskupplung gemäß eines zweiten Ausführungsbeispiels im getrennten Zustand;
- Fig. 4: die Darstellung der Figur 3 im verbundenen Zustand;
- Fig. 5: einen Längsschnitt durch eine erfindungsgemäße Medienführungskupplung gemäß eines dritten Ausführungsbeispiels im getrennten Zustand;
- Fig. 6: die Darstellung der Figur 5 im verbundenen Zustand;
- Fig. 7: einen Längsschnitt durch eine erfindungsgemäße Medienführungskupplung gemäß eines vierten Ausführungsbeispiels im getrennten Zustand;
- Fig. 8: die Darstellung der Figur 7 im verbundenen Zustand;
- Fig. 9: einen Längsschnitt durch eine erfindungsgemäße Medienführungskupplung gemäß eines fünften Ausführungsbeispiels im getrennten Zustand;
- Fig. 10: die Darstellung der Figur 9 im verbundenen Zustand; und
- Fig. 11: einen Längsschnitt durch eine erfindungsgemäße Medienführung mit der Medienführungskupplung des fünften Ausführungsbeispiels.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U. Die Längsachse X, die radiale Richtung R und die Umfangsrichtung U können gemeinsam auch als Raumrichtungen X, R, U bzw. als zylindrische Raumrichtungen X, R, U bezeichnet werden.

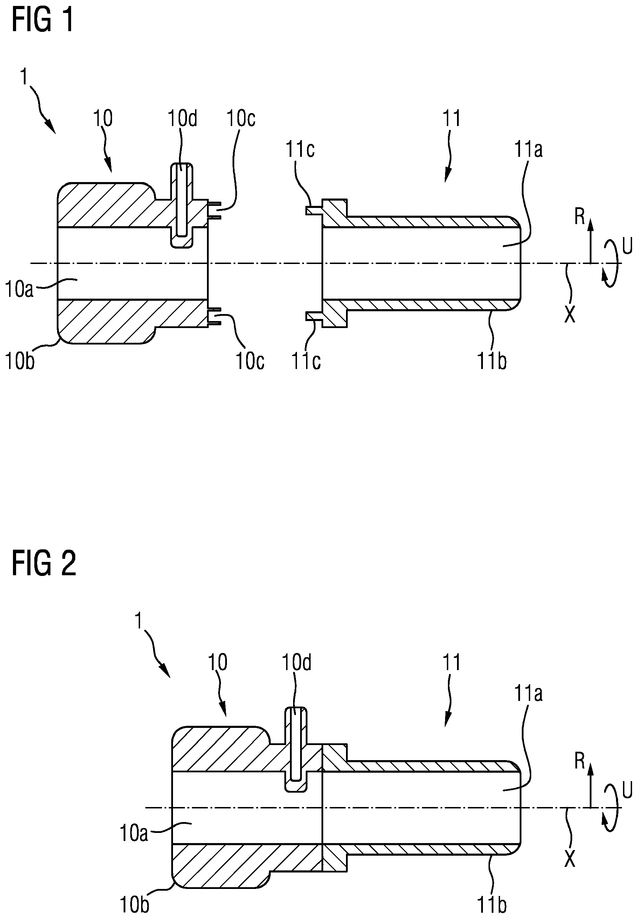

Fig. 1 zeigt einen Längsschnitt durch eine erfindungsgemäße Medienführungskupplung 1 gemäß eines ersten Ausführungsbeispiels im getrennten Zustand. Fig. 2 zeigt die Darstellung der Figur 1 im verbundenen Zustand. Die Medienführungskupplung 1 wird am Beispiel einer Schlauchkupplung 1 in Form einer Schnellkupplung 1 betrachtet.

Die Schlauchkupplung 1 weist ein erstes Kupplungselement 10 mit einer Durchflussöffnung 10a auf, durch welche hindurch ein Medium wie insbesondere ein Fluid entlang der Längsrichtung X strömen kann. Entlang der Längsachse X nach links und somit nach außen gerichtet weist das erste Kupplungselement 10 ein erstes Verbindungselement 10b und gegenüberliegend ein nach innen gerichtetes zweites Verbindungselement 10c auf. Radial ausgerichtet weist das erste Kupplungselement 10 ferner eine Sensoraufnahme 10d auf, welche radial von außen zugänglich ist und stiftartig radial nach innen in die Durchflussöffnung 10a hineinragt.

Die Schlauchkupplung 1 weist ferner ein zweites Kupplungselement 11 mit einer Durchflussöffnung 11a auf, durch welche hindurch das Fluid entlang der Längsrichtung X strömen kann. Entlang der Längsachse X nach rechts und somit nach außen gerichtet weist das zweite Kupplungselement 11 ein erstes Verbindungselement 11b und gegenüberliegend ein nach innen gerichtetes zweites Verbindungselement 11c auf.

Die beiden Kupplungselemente 10, 11 sind jeweils als Spritzgussteil separat hergestellt, wobei das zweite Kupplungselement 11 als faserverstärktes Spritzgussteil ausgebildet ist. Beide Kupplungselemente 10, 11 können mittels ihres jeweiligen ersten Verbindungselements 10b, 11b jeweils mit einer weiteren medienführenden Vorrichtung 2 wie beispielsweise einem Schlauch 2, einem Rohr 2 bzw. einem Aggregat fluiddicht verbunden werden. Hierzu können verschiedene mechanische Verbindungsmechanismen wie beispielsweise Rasten, Klipsen oder Schrauben verwendet werden, insbesondere in Kombination mit einem dazwischenliegenden Dichtelement wie beispielsweise einem O-Ring.

Beide Kupplungselemente 10, 11 können mittels ihrer korrespondierenden zweiten Verbindungselemente 10c, 11c feststehend und fluiddicht miteinander verbunden werden, siehe Figur 2, so dass die jeweiligen Durchflussöffnungen 10a, 11a der Kupplungselemente 10, 11 eine gemeinsame Durchflussöffnung 10a, 11a der Schlauchkupplung 1 bilden. Hierzu können ebenfalls verschiedene mechanische Verbindungsmechanismen wie beispielsweise Rasten, Klipsen oder Schrauben verwendet werden, insbesondere in Kombination mit einem dazwischenliegenden Dichtelement wie beispielsweise einem O-Ring.

Die beiden Kupplungselemente 10, 11 können in unterschiedlicher Ausgestaltung hinsichtlich ihrer ersten Verbindungselemente 10b, 11b vorliegen, so dass jeweils aus einer Vielzahl von Varianten erster Kupplungselemente 10 und zweiter Kupplungselemente 11 die passende Variante für die jeweiligen weiteren medienführenden Vorrichtungen 2 je nach Anwendungsfall ausgewählt werden kann. Ferner kann das erste Kupplungselement 10 hinsichtlich seiner Sensoraufnahme 10d an den zu verwendenden Sensor 3 angepasst sein. Dann können die beiden ausgewählten Kupplungselemente 10, 11 mittels ihrer korrespondierenden zweiten Verbindungselemente 10c, 11c feststehend und fluiddicht miteinander verbunden werden, um die Schlauchkupplung 1 zu bilden. Die Schlauchkupplung 1 kann daher auch als modulare Schlauchkupplung 1 bezeichnet werden.

Auf diese Art und Weise kann einfach, flexibel und schnell eine Schlauchkupplung 1 geschaffen werden, welche an den jeweiligen Anwendungsfall angepasst ist. Gleichzeitig kann auch eine Anpassung an den zu verwendenden Sensor 3 erfolgen.

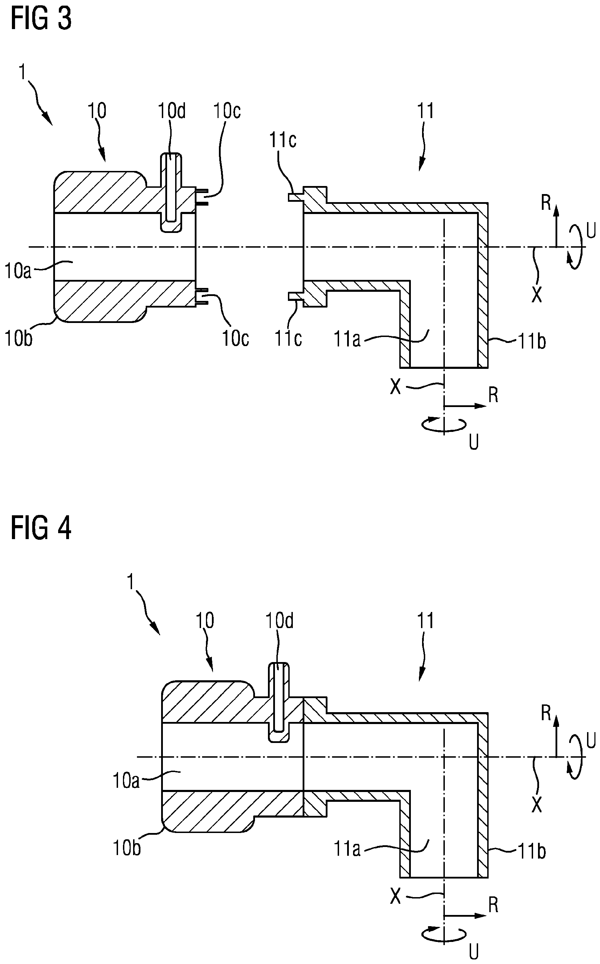

Fig. 3 zeigt einen Längsschnitt durch eine erfindungsgemäße Medienführungskupplung 1 gemäß eines zweiten Ausführungsbeispiels im getrennten Zustand. Fig. 4 zeigt die Darstellung der Figur 3 im verbundenen Zustand. In diesem Fall wird als zweites Kupplungselement 11 ein rechtwinkeliges Kupplungselement 11 anstelle eines geradlinigen Kupplungselements 11 verwendet, wie es bei dem ersten Ausführungsbeispiel der Fall ist.

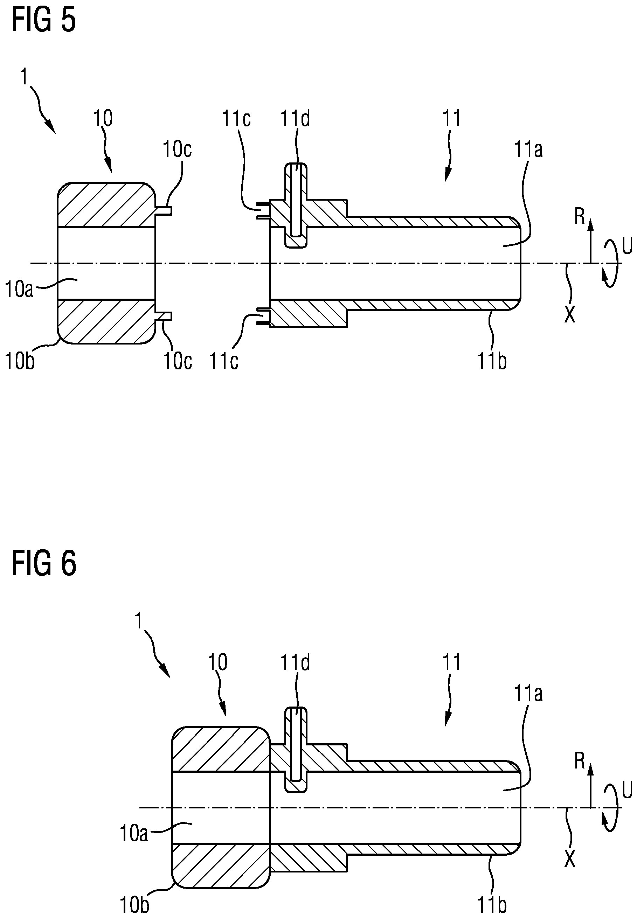

Fig. 5 zeigt einen Längsschnitt durch eine erfindungsgemäße Medienführungskupplung 1 gemäß eines dritten Ausführungsbeispiels im getrennten Zustand. Fig. 6 zeigt die Darstellung der Figur 5 im verbundenen Zustand. Das dritte Ausführungsbeispiel entspricht dem ersten Ausführungsbeispiel mit dem Unterschied, dass nun das zweite Kupplungselement 11 eine Sensoraufnahme 11d aufweist.

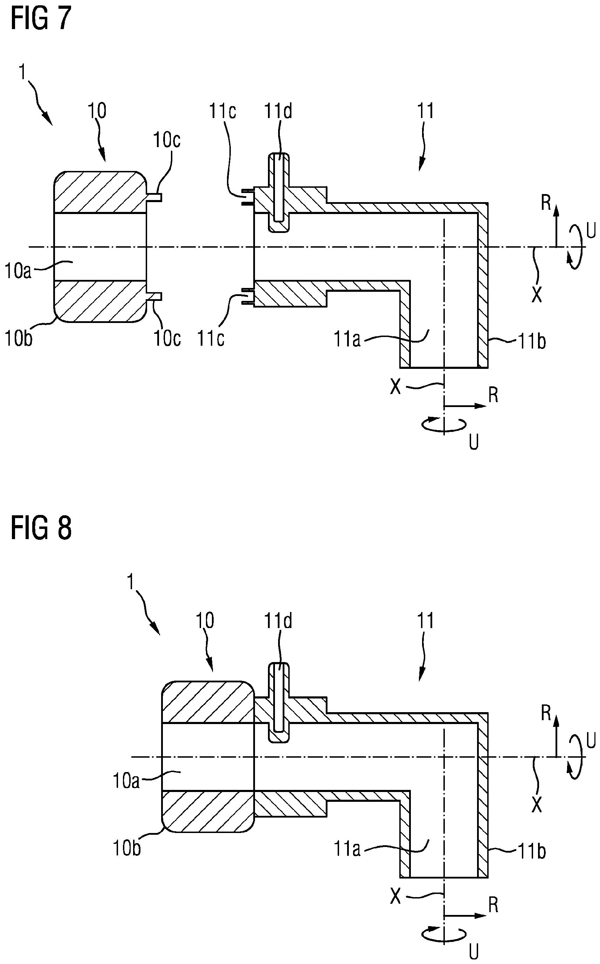

Fig. 7 zeigt einen Längsschnitt durch eine erfindungsgemäße Medienführungskupplung 1 gemäß eines vierten Ausführungsbeispiels im getrennten Zustand. Fig. 8 zeigt die Darstellung der Figur 7 im verbundenen Zustand. Das vierte Ausführungsbeispiel stellt eine Kombination des zweiten und dritten Ausführungsbeispiels dar.

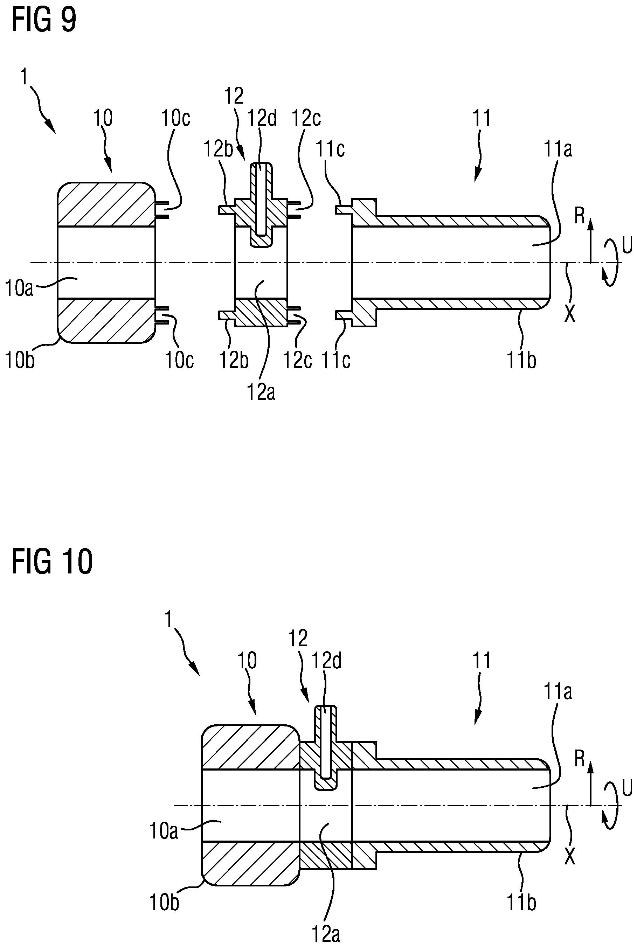

Fig. 9 zeigt einen Längsschnitt durch eine erfindungsgemäße Medienführungskupplung 1 gemäß eines fünften Ausführungsbeispiels im getrennten Zustand. Fig. 10 zeigt die Darstellung der Figur 9 im verbundenen Zustand.

In diesem Fall weisen die beiden Kupplungselemente 10, 11 keine Sensoraufnahmen 10d, 11d auf. Vielmehr ist die modulare Schlauchkupplung 1 dreiteilig ausgebildet, indem entlang der Längsachse X zwischen den beiden außenseitigen Kupplungselementen 10, 11 ein korrespondierendes Sensorelement 12 angeordnet ist. Das Sensorelement 12 weist eine entsprechende Durchflussöffnung 12a sowie nach links ein ersten Verbindungselement 12b und nach rechts ein zweites Verbindungselement 12c auf, um mit den zweiten Verbindungselementen 10c, 11c der beiden Kupplungselemente 10, 11 wie zuvor beschrieben verbunden zu werden. Auch weist das Sensorelement 12 eine Sensoraufnahme 12d auf.

Entsprechend können die beiden Kupplungselemente 10, 11 je nach Anwendungsfall zu den jeweiligen weiteren medienführenden Vorrichtungen 2 passend ausgewählt werden. Ebenso kann das Sensorelement 12 passend zum jeweiligen Sensor 3 ausgewählt werden. Dies kann die Möglichkeiten der Modularität vereinfachen bzw. erweitern.

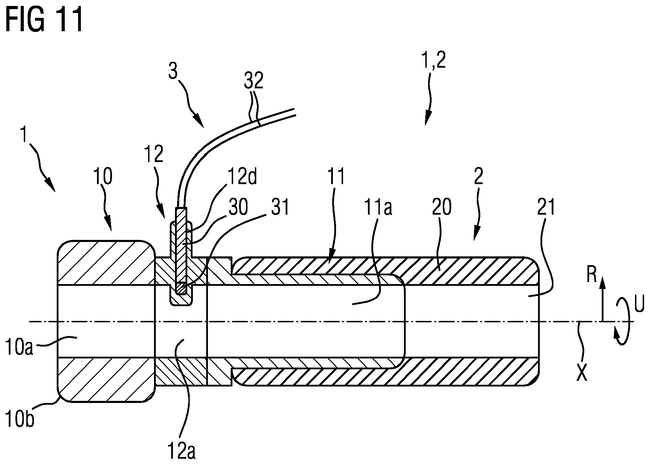

Fig. 11 zeigt einen Längsschnitt durch eine erfindungsgemäße Medienführung 1, 2 mit der Medienführungskupplung 1 des fünften Ausführungsbeispiels. Es ist ein Schlauch 2 als zweite medienführende Vorrichtung 2 bzw. dessen Wandung 20 über das erste Verbindungselement 11b des zweiten Kupplungselements 11 übergezogen und so mit dem ersten Verbindungselement 11b des zweiten Kupplungselements 11 verbunden, so dass eine Durchflussöffnung 21 des Schlauches 2 mit der Durchflussöffnung 10a, 11a, 12a der Schlauchkupplung 1 zusammenfällt. Ferner wird ein Sensor 3 in Form eines Temperatursensors 3 von der Sensoraufnahme 12d des Sensorelements 12 aufgenommen. Ein Sensorfühler 31 in Form eines NTC-Thermistors 31 ragt dabei bis ganz nach innen bzw. unten in die Sensoraufnahme 12d hinein und wird von einem Sensorgehäuse 30 gehalten sowie mit einem Sensorkabel 32 verbunden, um die Sensorwerte nach außerhalb zur Verfügung zu stellen.

### Bezugszeichenliste (Teil der Beschreibung)

- R: radiale Richtung
- U: Umfangsrichtung
- X: Längsrichtung

- 1, 2: Medienführung; Schlauchleitung; Rohrleitung

- 1: Medienführungskupplung; Schlauchkupplung; Schnellkupplung

- 10: erstes Kupplungselement
- 10a: Durchflussöffnung des ersten Kupplungselements 10
- 10b: erstes Verbindungselement des ersten Kupplungselements 10
- 10c: zweites Verbindungselement des ersten Kupplungselements 10
- 10d: Sensoraufnahme des ersten Kupplungselements 10

- 11: zweites Kupplungselement
- 11a: Durchflussöffnung des zweiten Kupplungselements 11
- 11b: erstes Verbindungselement des zweiten Kupplungselements 11
- 11c: zweites Verbindungselement des zweiten Kupplungselements 11
- 11d: Sensoraufnahme des zweiten Kupplungselements 11

- 12: Sensorelement; Sensorbereich
- 12a: Durchflussöffnung des Sensorelements 12
- 12b: erstes Verbindungselement des Sensorelements 12
- 12c: zweites Verbindungselement des Sensorelements 12
- 12d: Sensoraufnahme des Sensorelements 12

- 2: zweite medienführende Vorrichtung; Schlauch; Rohr
- 20: Wandung des Schlauches 2; Schlauchwand; Rohrwand
- 21: Durchflussöffnung

- 3: Sensor; Temperatursensor
- 30: Sensorgehäuse
- 31: Sensorfühler; NTC-Thermistor
- 32: Sensorkabel

## Patentansprüche

1. Medienführungskupplung (1)
mit einem ersten Kupplungselement (10)
mit einer Durchflussöffnung (10a) zur Führung eines Mediums durch sich hindurch, und
mit einem ersten Verbindungselement (10b) zur Verbindung mit einer zweiten medienführenden Vorrichtung (2), vorzugsweise mit einem Schlauch (2), Rohr (2) oder Aggregat, und
mit einem zweiten Kupplungselement (11)
mit einer Durchflussöffnung (11a) zur Führung des Mediums durch sich hindurch, und
mit einem ersten Verbindungselement (11b) zur Verbindung mit einer dritten medienführenden Vorrichtung, vorzugsweise mit einem Schlauch, Rohr oder Aggregat,
wobei die beiden Kupplungselemente (10, 11) derart mediendicht miteinander verbunden sind, so dass ihre Durchflussöffnungen (10a, 11a) eine gemeinsame Durchflussöffnung (10a, 11a) der Medienführungskupplung (1) bilden, und
wobei das erste Kupplungselement (10) eine Sensoraufnahme (10d) und/oder das zweite Kupplungselement (11) eine Sensoraufnahme (11d) aufweist,
**dadurch gekennzeichnet, dass**
das erste Kupplungselement (10) ein zweites Verbindungselement (10c) aufweist,
wobei das zweite Kupplungselement (11) ein zweites Verbindungselement (11c) aufweist, und
wobei das erste Kupplungselement (10) und das zweite Kupplungselement (11) mittels ihrer zweiten Verbindungselemente (10c, 11c)mittels Rasten, Klipsen oder Schrauben, mediendicht miteinander verbunden sind.

2. Medienführungskupplung (1) nach Anspruch 1,
wobei zwischen den beiden zweiten Verbindungselementen (10c, 11c) ein Dichtungselement, vorzugsweise ein O-Ring, angeordnet ist.

3. Medienführungskupplung (1) nach einem der vorangehenden Ansprüche, wobei das Kupplungselement (10, 11) ohne Sensoraufnahme (10d, 11d) als faserverstärktes Spritzgussteil ausgebildet ist.

4. Medienführungskupplung (1)
mit einem ersten Kupplungselement (10)
mit einer Durchflussöffnung (10a) zur Führung eines Mediums durch sich hindurch, und
mit einem ersten Verbindungselement (10b) zur Verbindung mit einer zweiten medienführenden Vorrichtung (2), vorzugsweise mit einem Schlauch (2), Rohr (2) oder Aggregat,
mit einem zweiten Kupplungselement (11)
mit einer Durchflussöffnung (11a) zur Führung des Mediums durch sich hindurch, und
mit einem ersten Verbindungselement (11b) zur Verbindung mit einer dritten medienführenden Vorrichtung, vorzugsweise mit einem Schlauch, Rohr oder Aggregat, und
mit einem Sensorelement (12)
mit einer Durchflussöffnung (12a) zur Führung des Mediums durch sich hindurch,
wobei das erste Kupplungselement (10) mit dem Sensorelement (12) und das Sensorelement (12) mit dem zweiten Kupplungselement (11) derart mediendicht miteinander verbunden sind, so dass ihre Durchflüsse (10a, 11a, 12a) einen gemeinsamen Durchflussöffnung (10a, 11a, 12a) der Medienführungskupplung (1) bilden, und
wobei das Sensorelement (12) eine Sensoraufnahme (12d) aufweist, **dadurch gekennzeichnet, dass**
das erste Kupplungselement (10) und/oder das zweite Kupplungselement (11) ein zweites Verbindungselement (10c, 11c) aufweist/ausweisen, wobei das Sensorelement (12) ein erstes Verbindungselement (12b), vorzugweise und ein zweites Verbindungselement (12c), aufweist, und wobei das erste Kupplungselement (10) und/oder das zweite Kupplungselement (11) mittels ihrer zweiten Verbindungselemente (10c, 11c)mittels Rasten, Klipsen oder Schrauben, mediendicht mit dem Verbindungselement(en) (12b, 12c) des Sensorelements (12) verbunden sind.

5. Medienführungskupplung (1) nach Anspruch 4,
wobei zwischen den Verbindungselementen (10c, 11c, 12b, 12c) (jeweils) ein Dichtungselement, vorzugsweise ein O-Ring, angeordnet ist.

6. Medienführungskupplung (1) nach einem der Ansprüche 4 bis 5,
wobei das erste Kupplungselement (10) und/oder das zweite Kupplungselement (11) als faserverstärktes Spritzgussteil ausgebildet ist/sind.

7. Medienführungskupplung (1) nach einem der vorangehenden Ansprüche, wobei das erste Verbindungselement (10b) des ersten Kupplungselements (10) und das erste Verbindungselement (11b) des zweiten Kupplungselements (11) mit gleichen oder unterschiedlichen Verbindungsmechanismen ausgebildet sind.

8. Medienführungskupplung (1) nach einem der vorangehenden Ansprüche, wobei die Sensoraufnahme (10d, 11d, 12d) wenigstens abschnittsweise, vorzugsweise vollständig, vorzugsweise senkrecht zur Durchflussöffnung (10a, 11a, 12a), in die Durchflussöffnung (10a, 11a, 12a) hineinragt.

9. Medienführung (1, 2)
mit einer Medienführungskupplung (1) nach einem der vorangehenden Ansprüche und
mit einer zweiten medienführenden Vorrichtung (2), vorzugsweise mit einem Schlauch (2), Rohr (2) oder Aggregat.

## Claims

1. Media guiding coupling (1)
having a first coupling element (10)
having a flow opening (10a) for guiding a medium therethrough; and
having a first connecting element (10b) for connecting to a second media guiding device (2), preferably to a hose (2), a tube (2) or an apparatus; and
having a second coupling element (11)
having a flow opening (11a) for guiding the medium therethrough; and
having a first connecting element (11b) for connecting to a third media guiding device, preferably to a hose, a tube or an apparatus; and
wherein the two coupling elements (10, 11) are connected to one another so as to be media-tight in such a manner that their flow openings (10a, 11a) form a common flow opening (10a, 11a) of the media guiding coupling (1); and
wherein the first coupling element (10) has a sensor receptacle (10d), and/or the second coupling element (11) has a sensor receptacle (11d),
**characterized in that**
the first coupling element (10) has a second connecting element (10c);
wherein the second coupling element (11) has a second connecting element (11c); and
wherein the first coupling element (10) and the second coupling element (11), by means of their second connecting elements (10c, 11c), are connected to one another in a media-tight manner by means of pawls, clips or screws.

2. Media guiding coupling (1) according to Claim 1,
wherein a sealing element, preferably an O-ring, is disposed between the two second connecting elements (10c, 11c).

3. Media guiding coupling (1) according to one of the preceding claims, wherein the coupling element (10, 11) without a sensor receptacle (10d, 11d) is formed as a fibre-reinforced injection-moulded part.

4. Media guiding coupling (1)
having a first coupling element (10)
having a flow opening (10a) for guiding a medium therethrough; and
having a first connecting element (10b) for connecting to a second media guiding device (2), preferably to a hose (2), a tube (2) or an apparatus; and
having a second coupling element (11)
having a flow opening (11a) for guiding the medium therethrough; and
having a first connecting element (11b) for connecting to a third media guiding device, preferably to a hose, a tube or an apparatus; and
having a sensor element (12)
having a flow opening (12a) for guiding the medium therethrough;
wherein the first coupling element (10) by way of the sensor element (12), and the sensor element (12) by way of the second coupling element (11), are connected to one another so as to be media-tight in such a manner that their flow openings (10a, 11a, 12a) form a common flow opening (10a, 11a, 12a) of the media guiding coupling (1); and
wherein the sensor element (12) has a sensor receptacle (12d),
**characterized in that**
the first coupling element (10) and/or the second coupling element (11) have/has a second connecting element (10c, 11c), wherein the sensor element (12) has a first connecting element (12b), preferably and a second connecting element (12c), and wherein the first coupling element (10) and/or the second coupling element (11), by means of their second connecting elements (10c, 11c) are connected to the connecting element(s) (12b, 12c) of the sensor element (12) by means of pawls, clips or screws in a media-tight manner.

5. Media guiding coupling (1) according to Claim 4,
wherein a sealing element, preferably an O-ring, is disposed (in each case) between the connecting elements (10c, 11c, 12b, 12c).

6. Media guiding coupling (1) according to one of Claims 4 to 5,
wherein the first coupling element (10) and/or the second coupling element (11) are/is formed as a fibre-reinforced injection-moulded part.

7. Media guiding coupling (1) according to one of the preceding claims, wherein the first connecting element (10b) of the first coupling element (10) and the first connecting element (11b) of the second coupling element (11) are designed with identical or dissimilar connecting mechanisms.

8. Media guiding coupling (1) according to one of the preceding claims, wherein the sensor receptacle (10d, 11d, 12d) protrudes at least in portions, preferably completely, into the flow opening (10a, 11a, 12a), preferably so as to be perpendicular to the flow opening (10a, 11a, 12a).

9. Media guide (1, 2)
having a media guiding coupling (1) according to one of the preceding claims, and
having a second media guiding device (2), preferably having a hose (2), a tube (2) or an apparatus.

## Revendications

1. Accouplement de guidage de fluide (1)
avec un premier élément d'accouplement (10)
avec une ouverture de passage (10a) pour guider un fluide à travers celle-ci, et avec un premier élément de liaison (10b) pour la liaison à un deuxième dispositif de guidage de fluide (2), de préférence à un tuyau (2), un tube (2) ou un groupe, et
avec un deuxième élément d'accouplement (11)
avec une ouverture de passage (11a) pour guider le fluide à travers celle-ci, et avec un premier élément de liaison (11b) pour la liaison à un troisième dispositif de guidage de fluide, de préférence à un tuyau, un tube ou un groupe,
les deux éléments d'accouplement (10, 11) étant reliés l'un à l'autre de manière étanche au fluide de telle sorte que leurs ouvertures de passage (10a, 11a) forment une ouverture de passage commune (10a, 11a) de l'accouplement de guidage de fluide (1), et
le premier élément d'accouplement (10) présentant un logement de capteur (10d) et/ou le deuxième élément d'accouplement (11) présentant un logement de capteur (11d),
**caractérisé en ce que**
le premier élément d'accouplement (10) présente un deuxième élément de liaison (10c),
le deuxième élément d'accouplement (11) présentant un deuxième élément de liaison (11c), et
le premier élément d'accouplement (10) et le deuxième élément d'accouplement (11) étant reliés l'un à l'autre de manière étanche au fluide au moyen de leurs deuxièmes éléments de liaison (10c, 11c) par encliquetage, clipsage ou vissage.

2. Accouplement de guidage de fluide (1) selon la revendication 1,
un élément d'étanchéité, de préférence un joint torique, étant agencé entre les deux deuxièmes éléments de liaison (10c, 11c).

3. Accouplement de guidage de fluide (1) selon l'une quelconque des revendications précédentes,
l'élément d'accouplement (10, 11) sans logement de capteur (10d, 11d) étant réalisé sous forme de pièce moulée par injection renforcée par des fibres.

4. Accouplement de guidage de fluide (1)
avec un premier élément d'accouplement (10)
avec une ouverture de passage (10a) pour guider un fluide à travers celle-ci, et avec un premier élément de liaison (10b) pour la liaison à un deuxième dispositif de guidage de fluide (2), de préférence à un tuyau (2), un tube (2) ou un groupe, avec un deuxième élément d'accouplement (11)
avec une ouverture de passage (11a) pour guider le fluide à travers celle-ci, et avec un premier élément de liaison (11b) pour la liaison à un troisième dispositif de guidage de fluide, de préférence à un tuyau, un tube ou un groupe, et
avec un élément capteur (12)
avec une ouverture de passage (12a) pour guider le fluide à travers celle-ci,
le premier élément d'accouplement (10) avec l'élément capteur (12) et l'élément capteur (12) avec le deuxième élément d'accouplement (11) étant reliés l'un à l'autre de manière étanche au fluide de telle sorte que leurs passages (10a, 11a, 12a) forment une ouverture de passage commune (10a, 11a, 12a) de l'accouplement de guidage de fluide (1), et
l'élément capteur (12) présentant un logement de capteur (12d),
**caractérisé en ce que**
le premier élément d'accouplement (10) et/ou le deuxième élément d'accouplement (11) présentent un deuxième élément de liaison (10c, 11c), l'élément capteur (12) présentant un premier élément de liaison (12b), de préférence et un deuxième élément de liaison (12c), et le premier élément d'accouplement (10) et/ou le deuxième élément d'accouplement (11) étant reliés de manière étanche au fluide à l'élément ou aux éléments de liaison (12b, 12c) de l'élément capteur (12) au moyen de leurs deuxièmes éléments de liaison (10c, 11c) par encliquetage, clipsage ou vissage.

5. Accouplement de guidage de fluide (1) selon la revendication 4,
un élément d'étanchéité, de préférence un joint torique, étant agencé entre les éléments de liaison (10c, 11c, 12b, 12c) (respectivement).

6. Accouplement de guidage de fluide (1) selon l'une quelconque des revendications 4 à 5,
le premier élément d'accouplement (10) et/ou le deuxième élément d'accouplement (11) étant réalisé(s) sous forme de pièce moulée par injection renforcée par des fibres.

7. Accouplement de guidage de fluide (1) selon l'une quelconque des revendications précédentes,
le premier élément de liaison (10b) du premier élément d'accouplement (10) et le premier élément de liaison (11b) du deuxième élément d'accouplement (11) étant réalisés avec des mécanismes de liaison identiques ou différents.

8. Accouplement de guidage de fluide (1) selon l'une quelconque des revendications précédentes,
le logement de capteur (10d, 11d, 12d) pénétrant au moins par sections, de préférence complètement, de préférence perpendiculairement à l'ouverture de passage (10a, 11a, 12a), dans l'ouverture de passage (10a, 11a, 12a).

9. Guide de fluide (1,2)
avec un accouplement de guidage de fluide (1) selon l'une quelconque des revendications précédentes et
avec un deuxième dispositif de guidage de fluide (2), de préférence avec un tuyau (2), un tube (2) ou un groupe.
